# EUROPÄISCHE PATENTSCHRIFT

(11) **EP 2 252 914 B1**
(45) Veröffentlichungstag und Bekanntmachung des Hinweises auf die Patenterteilung: **19.07.2017**
(21) Anmeldenummer: 09720610.6
(22) Anmeldetag: 10.03.2009
(51) Int. Cl.: G03B 42/02, G03B 42/04

(54) **SPEICHERFOLIENZUFÜHRUNG**
STORAGE FILM FEED
DISPOSITIF D'INTRODUCTION D'ÉCRAN À MÉMOIRE

(30) Priorität: 12.03.2008 DE 102008013918
(43) Veröffentlichungstag der Anmeldung: 24.11.2010
(60) Teilanmeldung: 17169518.2
(73) Patentinhaber: Thoms, Michael, 91054 Erlangen (DE)
(72) Erfinder: Thoms, Michael, 91054 Erlangen (DE)
(74) Vertreter: Meissner Bolte Partnerschaft mbB
(86) Internationale Anmeldenummer: PCT/EP2009/052790
(87) Internationale Veröffentlichungsnummer: WO 2009/112491

(56) Entgegenhaltungen:
- EP-A2- 0 363 092
- DE-A1- 19 942 211
- JP-A- 4 073 734
- JP-A- 58 004 135
- JP-A- 2003 015 240
- JP-A- 2006 091 126
- JP-A- 2006 195 072
- US-A- 5 315 632
- US-A- 6 046 458
- US-A1- 2006 113 500
- US-A1- 2008 042 083
- US-B1- 6 255 667

## Beschreibung

Die vorliegende Erfindung betrifft eine Speicherfolienzuführung zum Zuführen einer Speicherfolie aus einer einseitig an einer Stirnseite offenen flexiblen Hülle in ein Speicherfolienabtastgerät - kurz Trommelscanner, wie es beispielsweise aus der DE 199 42 211 bekannt ist, sowie ein mit einer solchen Speicherfolienzuführung versehenes Speicherfolienabtastgerät.

Derartige Speicherfolienabtastgeräte werden im dentalen Bereich eingesetzt, um intraorale Speicherfolien der Formate 24x30mm bis zu 56x75mm nach der Röntgenbelichtung im Mundraum des Patienten sowie extraorale Speicherfolien vom Format 127x300mm bis zu 240x300mm abzutasten. Im medizinischen Bereich beträgt die Speicherfoliengröße sogar bis zu 350x430mm und im Bereich der zerstörungsfreien Materialprüfung bis zu 100x400mm. Da die Speicherfolien nach der Röntgenbelichtung die gespeicherte Information verlieren, wenn sie Licht ausgesetzt werden, müssen sie zumindest auf der Funktionsseite durch lichtdichte Hüllen (Lichtschutzhüllen) oder Kassetten umschlossen sein, bis die Information im Speicherfolienabtastgerät abgetastet wird. Um zu vermeiden, dass die Hülle mitsamt der Speicherfolie in das Speicherfolienabtastgerät eingezogen wird, wird beispielsweise in der DE 199 42 211 vorgeschlagen, spezielle für das jeweilige Folienformat spezifische Einführeinrichtungen in Form von Kassetten zu verwenden, aus denen die Speicherfolie in das Speicherfolienabtastgerät vorgeschoben werden kann. Alternativ hierzu ist es im Stand der Technik bekannt, flexible Lichtschutzhüllen mit formschlüssigen Elementen zu versehen, so dass sie mit dem Einzugsbereich des Speicherfolienabtastgerätes verrasten und nicht eingezogen werden können. Weiterhin ist es zweckmäßig die Kassetten und flexiblen Lichtschutzhüllen am Durchtrittsspalt des Speicherfolienabtastgerätes so aufzudicken, dass dieser gegen Umgebungslicht abgeschirmt wird. Der Nachteil der ersten Lösung besteht darin, dass deutlich mehr Handhabungsaufwand entsteht, da die Speicherfolie erst aus der Hülle in die Einführhilfe geschoben, danach die Einführhilfe mit Speicherfolie am Einzugsbereich des Speicherfolienabtastgerätes verrastet und anschließend die Speicherfolie mit einem Hebel an der Einführhilfe in das Speicherfolienabtastgerät geschoben werden muss. Der Nachteil der zweiten Lösung besteht darin, dass die mit formschlüssigen Elementen versehene flexible Lichtschutzhülle nicht mehr ohne weiteres in konventionelle Röntgenkassetten passt.

Aus der JP 2006 091126 A ist eine Speicherfolienzuführung zum Zuführen einer Speicherfolie aus einer Kassette bekannt, deren vordere Stirnseite mit einer Klappe verschließbar ist. Während die Kassette in ein Speicherfolienabtastgerät eingeführt wird, liegt eine bewegbare Abdeckung an der Flachseite der Kassette an, um das Eindringen von Schmutzpartikeln in das Speicherfolienabtastgerät zu vermeiden. Sobald die vordere Stirnseite der Kassette einen Verriegelungs- bzw. Lösemechanismus im Inneren des Speicherfolienabtastgerätes erreicht und betätigt, wird die Klappe geöffnet und die Speicherfolie kann aus der Kassette austreten und in dem Speicherfolienabtastgerät abgetastet werden.

Die im Folgenden beschriebene Erfindung stellt sich die Aufgabe, die Speicherfolie ohne Hilfsmittel wie Kassetten aus einfachen, nicht unbedingt mit formschlüssigen Elementen versehenen Hüllen unter Fremdlichtschutz einem Speicherfolienabtastgerät zuzuführen und die Anzahl der Handhabungsschritte signifikant zu reduzieren. Weiterhin soll die Speicherfolie bei zylindrischer Abtastanordnung wie bei der DE 199 42 211 automatisch zylindrisch aufgespannt werden, so dass der entsprechende Handhabungsaufwand entfällt.

Gelöst wird diese Aufgabe durch eine an dem Speicherfolienabtastgerät integrierte Speicherfolienzuführung gemäß dem Hauptanspruch. Weitere Ausgestaltungen der Erfindung sind in Unteransprüchen niedergelegt und sollen an Hand der Figuren näher veranschaulicht werden.
Fig. 1 stellt einen Schnitt durch die erfindungsgemäße Speicherfolienzuführung dar nach dem Anlegen der Speicherfolie in der Hülle,
Fig.2 zeigt dasselbe bei teilweise herausgefahrener Speicherfolie aus der Hülle,
Fig. 3 stellt eine weitere Ausführungsform mit integrierter Haftbeschichtung dar,
Fig. 4 zeigt eine weitere Ausführungsform der Erfindung mit integriertem Lichtschutz und Formschluss zum Festhalten der Hülle,
Fig. 5 und Fig. 6 eine Variante der Erfindung mit teilweise weggekippter Auflagefläche,
Fig. 7 und Fig. 8 zwei Möglichkeiten, welche die Anordnung der erfindungsgemäßen Speicherfolienzuführung am Gehäuse des Speicherfolienabtastgerätes darstellen, während
Fig. 9 und Fig. 10 eine tangentiale Zuführung, bzw. Abführung der Speicherfolie zeigen.
Fig. 11 und Fig. 12 stellen eine weitere Ausführungsform mit feststehendem Durchtrittsspalt für die Speicherfolie dar.

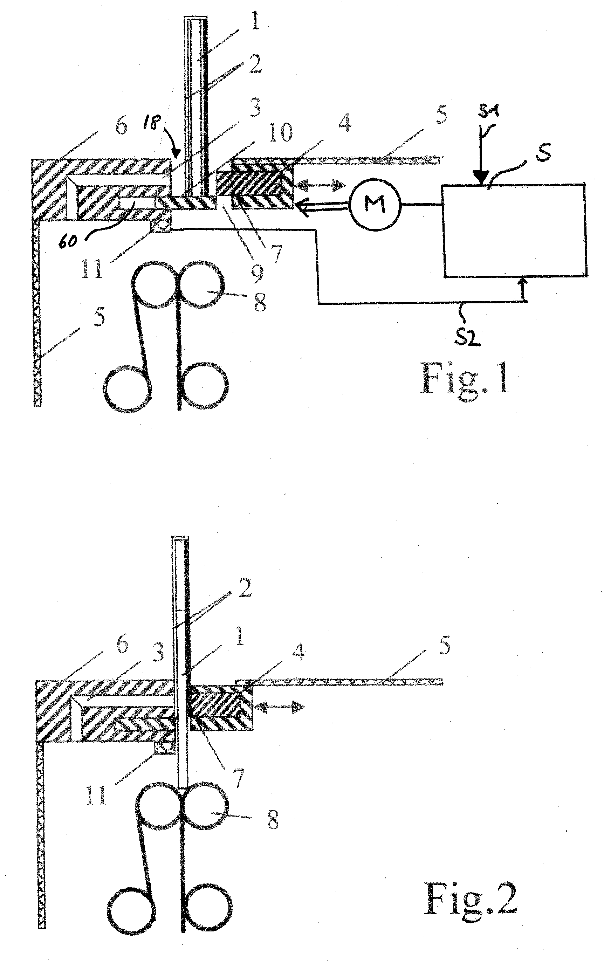

In Fig.1 ist eine erfindungsgemäße Speicherfolienzuführung im Schnitt dargestellt. Sie ist an einem Gehäuse 5 eines Speicherfolienabtastgerätes befestigt und umfasst einen Schieber 4, welcher unterhalb einer Einführöffnung 18 der Speicherfolienzuführung relativ zu einem am Gehäuse 5 fixierten Anschlagstück 6 entsprechend der Pfeilrichtung mit einem Antrieb M hin- und her bewegt werden kann. Dazu kann z. B. eine motorgetriebene Schubstange, eine motorgetriebene Spindel oder ein Hubmagnet eingesetzt werden. Diese Elemente sind in Abb. 1 der Übersichtlichkeit halber nur schematisch angedeutet. Der Schieber 4 ist entweder an dem Gehäuse 5 oder an dem Anschlagstück 6 geführt. Die Unterseite des Schiebers 4 bildet eine ebene Auflagefläche 10, auf welche eine mit einer Speicherfolie 1 bestückte, einseitig an einer Stirnseite offene flexible Hülle 2 mit ihrer offenen, ebenfalls ebenen Stirnseite manuell leicht von oben aufgelegt werden kann. Dadurch wird die Hülle 2 und damit die Speicherfolie 1 vertikal ausgerichtet. Die Auflagefläche 10 ist so gestaltet, dass sie in das Anschlagstück 6 eintaucht und auch in diesem linear geführt wird. Im Beispiel ist im Anschlagstück 6 als Führungselement für den Schieber 4 eine Nut 60 angeordnet, in der ein die Auflagefläche 10 bildender Steg des Schiebers 4 geführt ist. Im unteren Teil des Schiebers 4 befindet sich ein Durchtrittsspalt 9, dessen Breite geringfügig größer ist als die Dicke der Speicherfolie 1. Dieser Spalt 9 bildet eine Durchtrittsöffnung für die Speicherfolie 1 in das Innere des Gehäuses 5, wo es von einem Einzug 8 zum Weitertransport erfasst wird.

Die Innenflächen des Durchtrittsspaltes 9 sind mit einer weichen reibungsarmen Beschichtung oder Schicht versehen, wie z. B. PTFE (Teflon) oder LDPE (Low Density Polyethylen), um im Fehlerfall mögliche Reibung zwischen der kratzempfindlichen vorderen, d.h. bei Belichtung der Röntgenquelle zugewandten Flachseite der Speicherfolie 1 und dem Schieber 4 zu reduzieren. An der der Speicherfolie 1 bzw. dem Anschlagstück 6 zugewandten Stirnseite des Schiebers 4, ist ein Kompressionsstück 7, z.B. aus Weichgummischaum, angeordnet, welches den Durchtrittsspalt 9 überdeckt. Gegenüberliegend können im Anschlagstück 6 Saugluftkanäle 3 angeordnet sein, welche die Funktion haben, bei einem Andrücken des Schiebers 4 an das Anschlagstück 6 die Hülle 2 festzuhalten. Da es ungünstig ist, wenn Umgebungslicht in das Speicherfolienabtastgerät fällt, ist es wichtig, die Verbindungen zwischen den Teilen der Speicherfolienzuführung, d.h. zwischen dem Schieber 4 und dem Anschlagstück 6 und dem Gehäuse 5, möglichst spaltfrei bzw. lichtdicht auszuführen, damit kein Licht in den Innenraum des Abtastgerätes fällt. Eventuell kann es hierbei erforderlich sein, durch Nut und Federelemente an den Verbindungsflächen und Schwarzfärbung der Stoßkanten den Lichteinfall zu unterdrücken.

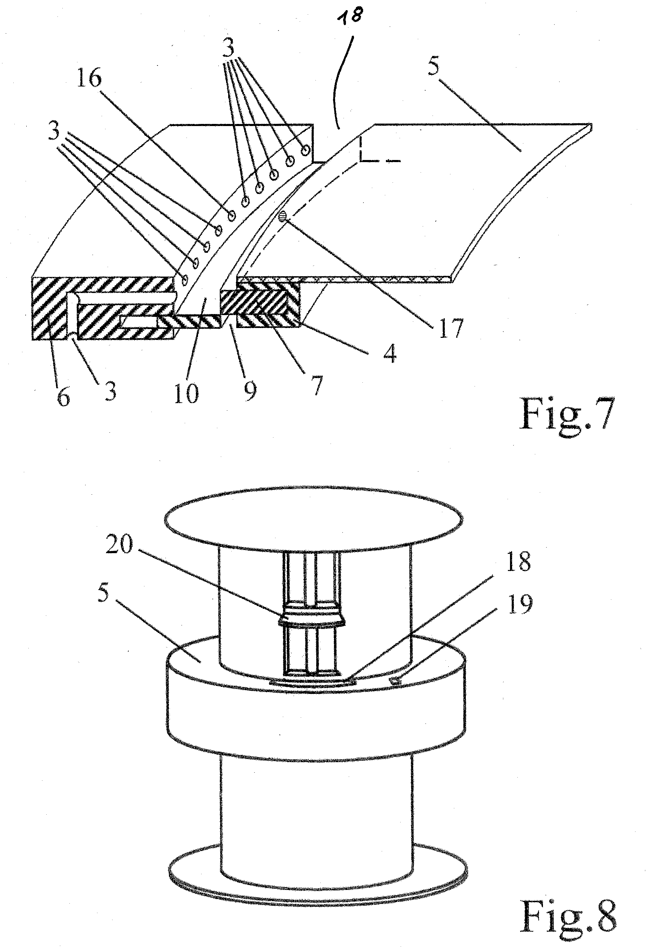

Damit detektiert werden kann, ob eine Speicherfolie 1 in die Einführöffnung 18 auf die Auflagefläche 10 aufgelegt wurde, ist ein Sensor, beispielsweise eine Reflexlichtschranke, in den Schieber 4 oder das Anschlagstück 6 eingebaut. Auch können erfindungsgemäß gegenüberliegend eine Photodiode 17 (Fig. 7) und eine Leuchtdiode 16 (Fig. 7) in diesen beiden Teilen eine Gabellichtschranke zur Erkennung der Speicherfolie bilden.

Wird nun eine in einer an einer Stirnseite offenen Hülle 2 befindliche Speicherfolie 1 mit dieser offenen Stirnseite in der Einführöffnung 18 auf die Auflagefläche 10 aufgelegt, gibt der Sensor ein Signal Slan eine Steuereinheit P, die entweder sofort oder mit einer kurzen Verzögerung mit dem Antrieb M den Schieber 4 senkrecht zu einer Flachseite der Hülle 2 nach links bewegt (Schließrichtung). Alternativ kann das Signal S1 durch einen Taster 19 (vergleiche Fig. 8) am Gehäuse 5 erzeugt werden. Durch die Bewegung des Schiebers 4 nach links wird die Hülle 2 mit der darin befindlichen Speicherfolie 1 zum Anschlagstück 6 geschoben, bis sie mit ihrer Flachseite an diesem anliegt. Dabei wird das Kompressionsstück 7 komprimiert und klemmt mit einer bestimmten Federkraft die Hülle 2 von außen fest. Wenn die Speicherfolie 1 mit ihrer Hülle 2 am Anschlagstück 6 anliegt, fluchtet deren Stirnseite mit dem Durchtrittsspalt 9. Wichtig ist, dass die Haftreibung zwischen den Anschlagflächen von Anschlagstück 6, Kompressionsstück 7 und der Hülle 2 deutlich größer ist, als die Haftreibung zwischen der Hülle 2 und der innen liegenden Speicherfolie 1. Mit anderen Worten: Die Haftreibungskoeffizienten zwischen der Speicherfolie 1 und den Innenflächen der Hülle 2 sind geringer als die Haftreibungskoeffizienten zwischen den Außenflächen der Hülle 2 und der Anschlagfläche des Anschlagstückes 6 bzw. dem Kompressionsstück 7 des Schiebers 4. Hierzu besteht die Hülle 2 an der Innenseite aus weichem, reibungsarmen Material, um den Verschleiß der Speicherfolie 1 zu reduzieren. Die Speicherfolie 1 kann zusätzlich mit mindestens einer verschleißarmen Deckschicht versehen sein, die vorzugsweise eine höhere Oberflächenhärte aufweist, als das Material auf der bzw. den entsprechenden Innenseiten der Hülle 2. Die Speicherfolie 1 kann außerdem eine Beschriftung tragen, die gegenüber der Hülle 2 verschleißarm ist, und eine höhere Oberflächenhärte aufweist, als das Material auf der bzw. den entsprechenden Innenseiten der Hülle 2.

Sowohl die dem Anschlagstück 6 zugewandte Stirnfläche des Kompressionsstücks 7 als auch die Anschlagfläche des Anschlagstückes 6 können zur Erhöhung der Haftreibung mit einer Haftschicht versehen sein.

Speicherfolienzuführung und Speicherfolie 1 mit Hülle 2 bilden auf diese Weise ein System, in dem die einzelnen Komponenten - Speicherfolienzuführung, Speicherfolie und Hülle - aufeinander abgestimmt sind. In der Praxis hat sich bei Verwendung einer Hülle 2 aus LDPE und einer Beschichtung des Kompressionsstücks 7 mit Silikon gezeigt, dass bei einer vom Schieber seitlich ausgeübten Andruckkraft von 1,6N die Haftkraft der Hülle 2 am Kompressionsstück 7 des Schiebers 4 etwa 1,1N und die Haftkraft der Speicherfolie 1 in der Hülle 2 etwa 0,4N beträgt.

Auf diese Weise ist mit einem Sicherheitsfaktor von nahezu 3 gewährleistet, dass die Speicherfolie 1 mit dem Finger aus der Hülle 2 geschoben werden kann, während die Hülle 2 selbst in der Einführöffnung 18 am Schieber 4 bzw. am Kompressionsstück 7 fixiert bleibt.

Um die Hülle 2 und damit die in ihr befindliche Speicherfolie 1 an ihren senkrecht zur Stirnseite verlaufenden Schmalseiten seitlich zu führen, kann an dem Anschlagstück 6 oder dem Gehäuse 5 außerdem ein seitliches, an einer Schmalseite der Hülle 2 anliegendes Anlageelement angeordnet sein. Um verschiedene Speicherfolien- und Einzugsbreiten zu ermöglichen, kann das Anlageelement außerdem an verschiedenen Positionen z.B. durch eine Rastverbindung positioniert werden.

Fig. 2 zeigt den Zustand, wenn anschließend durch einen Druck auf die der offenen Stirnseite abgewandte geschlossene Stirnseite der Hülle 2 und damit der Speicherfolie 1 diese durch den Durchtrittsspalt 9 nach unten geschoben wurde. Dies kann z.B. manuell von Hand oder motorisch gesteuert durch einen weiteren von oben angreifenden Schieber oder Hebel geschehen. Unterhalb des Durchtrittsspalts 9 trifft die Speicherfolie 1 auf den Einzug 8, z.B. in Form eines Bandtransports. Dieser zieht die Speicherfolie 1 kontinuierlich weiter nach unten während die Hülle 2 weiterhin zwischen Anschlagstück 6 und Kompressionsstück 7 geklemmt bleibt. Dabei dichtet das Kompressionsstück 7, welches aus lichtundurchlässigem Material besteht, einen zwischen Anschlagstück 6 und Schieber 4 verbleibenden Trennspalt ab. Der Abstand zwischen Anschlagstück 6 und Schieber 4 ist in dieser Position etwas größer als die Dicke der Speicherfolie 1 inklusive Hülle 2, damit kein nennenswerter Druck von dem Schieber 4 selbst sondern nur von dem Kompressionsstück 7 auf die Hülle 2 ausgeübt wird.

Die lichte Weite des Durchtrittsspaltes 9 ist etwas größer als die Dicke der Speicherfolie 1 so dass seine Innenflächen in dieser Position die Speicherfolie 1 nicht berühren, und beispielsweise jeweils einen Mindestabstand von 0,3 mm zur Speicherfolie 1 aufweisen.

An der von der Einführöffnung 18 abgewandten Unterseite des Anschlagstückes 6 ist ein Sensor 11, beispielsweise eine Lichtschranke angeordnet, der ein Signal S2 generiert, mit dem angezeigt wird, dass die Speicherfolie 1 durch den Durchtrittsspalt 9 vorgeschoben worden ist. Das Signal S2 des Sensors 11 kann dazu verwendet werden, um den Einzug 8, hier in Form eines Bandtransports schematisch angedeutet, zu starten. Der Sensor 11 detektiert außerdem, wenn die Speicherfolie 1 den Durchtrittsspalt 9 wieder verlässt, d.h. diesen komplett durchlaufen hat. Mit dem vom Sensor 11 generierten Signal S2 wird mit einer kurzen Zeitverzögerung mit dem von der Steuereinheit P gesteuerten Antrieb M der Schieber 4 wieder in die Ausgangsposition gemäß Abb. 1 geschoben, so dass eine weitere Speicherfolie 1 mit ihrer Hülle 2 angelegt werden kann. Alternativ kann das Öffnen des Schiebers 4 auch durch eine Taste 19 (Fig. 8), die am Gehäuse 5 angebracht ist, durch den Anwender ausgelöst werden. Durch das Kompressionsstück 7 wird während dieses Vorgangs wieder der Durchtrittsspalt 9 lichtdicht verschlossen. In einer weiteren Variante kann auch eine Verzögerungsschaltung in der Steuereinheit P realisiert sein, so dass der Schieber 4 erst in die Ausgangsposition gefahren wird, nachdem die Speicherfolie 1 vollständig abgetastet wurde. Dadurch wird immer sichergestellt, dass kein Außenlicht während des Abtastvorgangs durch das Bewegen des Schiebers 4 einfallen kann und dadurch das abgetastete Bild keine Störungen enthält.

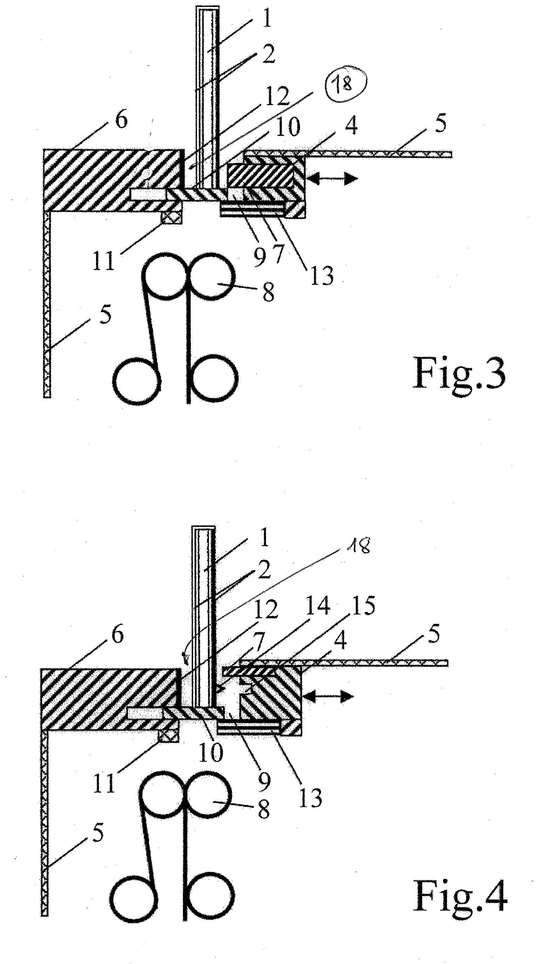

Fig. 3 zeigt die erfindungsgemäße Ausgestaltung, bei der die Anschlagfläche des Anschlagstückes 6 mit einer Haftbeschichtung 12, z.B. aus Silikongummi, versehen ist. Weiterhin ist unterhalb des Durchtrittsspalts 9 ein Lichtschutzelement 13, beispielsweise eine Bürste, angeordnet, welches den Durchtrittsspalt 9 abdeckt und zusätzlichen Lichtschutz bietet. Beim Einführen der Speicherfolie 1 wird dieses Lichtschutzelement nach unten gebogen und auf diese Weise vom Durchtrittsspalt 9 wegschwenkt.

Alternativ zu der Haftbeschichtung 12 kann ein Formschluss der Hülle 2 mit der Einführöffnung 18 beim Schließen des Schiebers 1 verwendet werden, wie es in Fig. 4 dargestellt ist. Dazu kann zum Beispiel als formschlüssige Verbindung ein schmaler, keilförmiger Steg 14 auf der Hülle 2 aufgebracht sein, welcher bei Betätigung des Schiebers 4 in Schließrichtung in eine entsprechenden Aussparung 15 des Schiebers 4 eingreift und verhindert, dass die Hülle 2 bei geschlossenem Schieber 4durch den Durchtrittsspalt 9 gezogen wird. Nach wie vor ist das lichtundurchlässige Kompressionsstück 7 an dem Schieber 4 angebracht, um gegen Umgebungslicht abzudichten. Eine solche formschlüssige Verbindung 14,15 kann alternativ oder ergänzend hierzu auch zwischen Hülle 2 und Anschlagstück 6 vorgesehen sein.

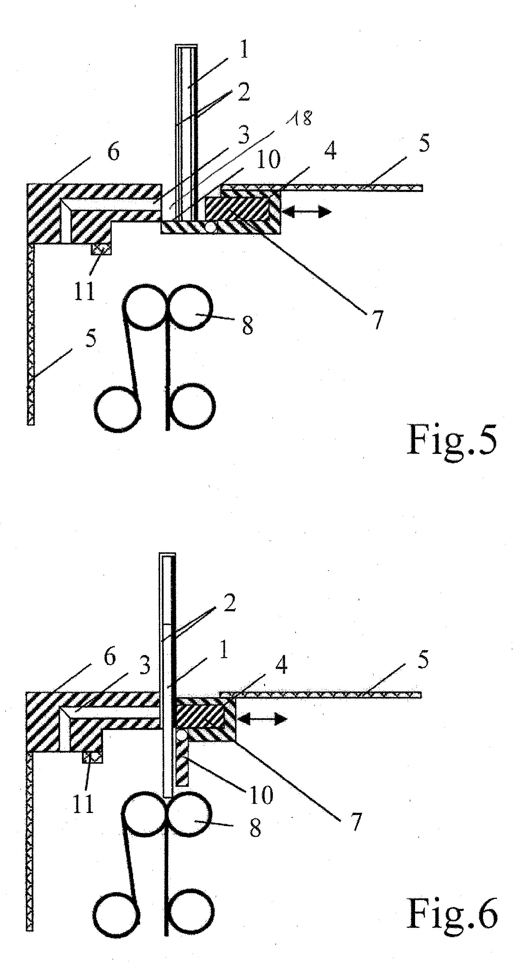

Die Fig. 5 und Fig.6 zeigen eine Variante bei welcher die ebene Auflagefläche 10 fluchtend mit der Unterseite des Anschlagstückes 6 (Speicherfolie 1 in Ausgangsstellung Fig.5) mit Hilfe eines Scharniers am Schieber 4 angeordnet ist und um 90 Grad um eine parallel zur Auflagefläche 10 der Speicherfolie 1 orientierte Achse geschwenkt werden kann, was der Stellung mit herausgefahrener Speicherfolie 1 entspricht (Fig. 6).

Fig. 7 zeigt eine die erfindungsgemäße Speicherfolienzuführung schematisch in einer zylindrisch gekrümmten Form. Diese Ausführung kann besonders vorteilhaft in Verbindung mit dem unter DE 199 42 211 beschriebenen Abtastgerät verwendet werden, da die Speicherfolie durch die Wirkung der Zuführung eine zylindrische Form erhält. Man erkennt die mittige Anordnung von Leuchtdiode 16 und Photodiode 17 relativ zur Einführöffnung 18. Grundsätzlich kann die Zuführung bei entsprechender Form des Schiebers 4 und des Anschlagstücks 6 die Speicherfolie in andere Formen z. B. in eine parabelförmige oder elliptische Form biegen.

Fig. 8 zeigt eine weitere perspektivische Ansicht der erfindungsgemäßen Speicherfolienzuführung, welche ebenfalls für das nach der DE 199 42 211 bekannte Abtastgerät verwendbar ist. Auch hier ist es möglich, die Leucht- und Photodiode mittig zur Einführöffnung 18 anzuordnen. Der Vorteil dieser Anordnung besteht darin, dass die mit der Speicherfolie 1 bestückte Hülle 2 in einfachster Weise in die Einführöffnung 18 eingelegt werden kann, was für einen vollautomatischen Betrieb notwendig ist. Weiterhin kann ein zusätzlicher parallel zur Flachseite der eingelegten Speicherfolie 1 bzw. Hülle 2, im Beispiel in vertikaler Richtung betätigbarer Zuführschieber 20 vorgesehen werden, mit welchem die Speicherfolie 1 nach dem Schließen des im Beispiel horizontalen Schiebers 4 in den Transportbereich vorgeschoben wird. Dabei greift der Schieber 20 an der Oberseite, d.h. der der offenen Stirnseite abgewandten Stirnseite der mit der Speicherfolie 1 bestückten Hülle 2 an. Der Zuführschieber 20 ist an seiner der Stirnseite der Hülle 2 zugewandten Unterseite vorzugsweise eben, so dass ein Verkippen der Speicherfolie 1 beim Herausschieben aus der Hülle 2 vermieden wird. Wird der Zuführschieber 20 motorisch verfahren, arbeitet der Einzug vollautomatisch und die Handhabung des Anwenders beschränkt sich auf das Auflegen der Speicherfolie 1 mit der einseitig geöffneten Hülle 2 auf die Auflagefläche 10 der Einführöffnung. Der Zuführschieber 20 schiebt dann durch einen motorischen Antrieb die Speicherfolie 1 durch den Durchtrittsspalt 9, nachdem der Schieber 4 an der Hülle 2 anliegt und diese festklemmt. Durch den motorischen Antrieb wird der Zuführschieber 20 erneut in die Ausgangsstellung zurückbewegt, wenn die Speicherfolie 1 den Durchtrittsspalt 9 verlassen hat. Es sei an dieser Stelle angemerkt, dass die erfindungsgemäße Zuführung auch mit festen Kassetten zusammen arbeitet, deren untere Kontur der Form des Zufuhrschlitzes 18 entspricht, und die an der Unterseite eine Öffnung aufweisen, welche mit dem Durchtrittsspalt 9 fluchtet. Weiterhin kann mit Hilfe des Zuführschiebers 20 die Speicherfolie 1 aus einer solchen Kassette nach unten geschoben werden, wenn die Kassette z. B. Öffnungen aufweist, durch welche der Zuführschieber 20 direkt auf die Speicherfolie wirken kann, oder z.B. ein weiteres Koppelstück aufweist, welches aus der Kassette herausragt, und den Zuführschieber 20 mit der Speicherfolienoberkante verbindet.

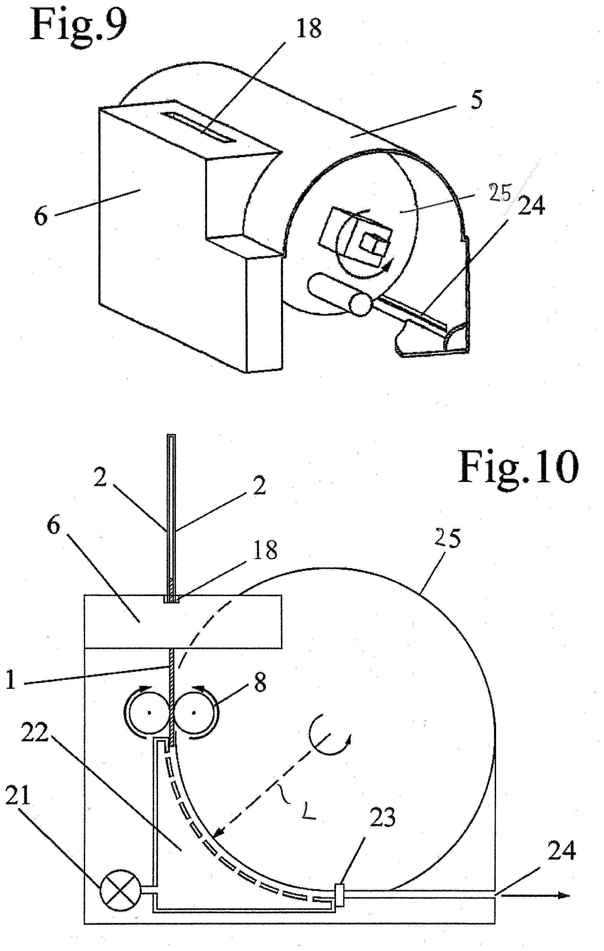

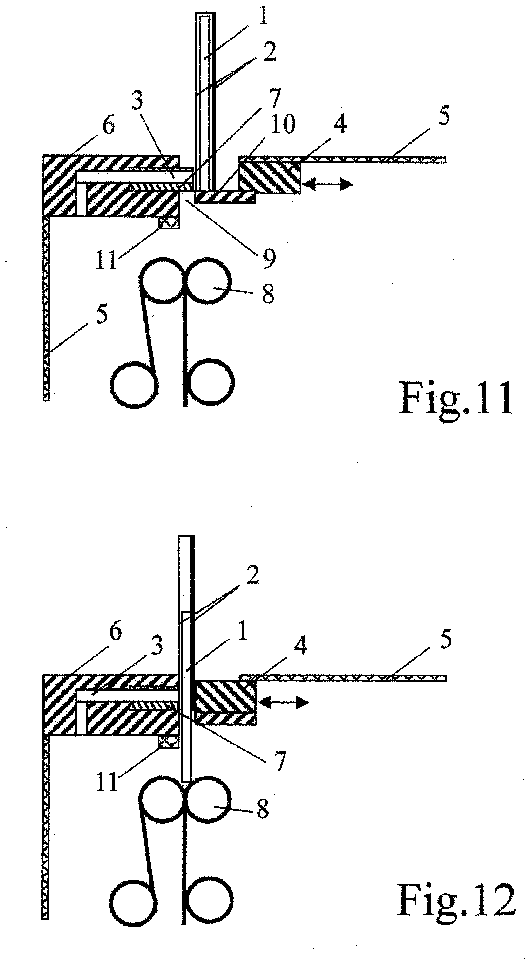

In Verbindung mit einer Ausleseeinheit, wie sie schon in der DE 199 42 211 beschrieben und dort in Fig. 11 abgebildet ist, kann mit der erfindungsgemäßen Speicherfolienzuführung ein in den Fig. 9 und 10 dargestelltes, besonders kompaktes Speicherfolienabtastgerät realisiert werden. In Fig. 9 ist ein Speicherfolienabtastgerät veranschaulicht, bei dem die Speicherfolie tangential zu einer um eine Drehachse umlaufenden Trommel 25, in der ein mit der Trommel 25 umlaufender Laser angeordnet ist, eingezogen und ausgeworfen wird. In diesem Fall haben die Einführöffnung 18 als auch die Auslassöffnung 24 die Gestalt eines parallel zur Drehachse orientierten Schlitzes.

Das Querschnittbild nach Fig.10 zeigt mit 2 die Hülle, in welcher sich noch zum Teil die Speicherfolie 1 befindet, die mittels eines Rollenantriebs 8 gerade in einen viertelkreisförmigen Schlitten 22 eintritt. Der Schlitten ist mit Perforationen zum besseren Anhaften der Speicherfolie 1 versehen, welche durch Betätigen einer Vakuumpumpe 21 aktiviert werden, sobald die Speicherfolie 1 einen Anschlag 23 erreicht hat. Sodann wird die Speicherfolie 1 unter gleichzeitiger Vorwärtsbewegung des Schlittens, beispielsweise mittels eines nicht dargestellten Zahnstangenantriebs, durch den gestrichelt angedeuteten, in einer Ebene verlaufenden Laserstrahl L abgetastet. Nach Beendigung dieses Vorgangs gibt der Anschlag 23 die Speicherfolie 1 frei, die Vakuumpumpe 21 wird deaktiviert und die Speicherfolie 1 erscheint an der Auslassöffnung 24. Zusätzlich kann auch noch ein weiteres, nicht dargestelltes, angetriebenes Rollenpaar vorgesehen sein, falls die Schwerkraft nicht ausreichend ist, um die Speicherfolie 1 genügend weit aus dem Auslassschlitz 24 herauszubewegen. Dasselbe gilt, wenn der Schlitten, bzw. die Speicherfolie 1, größer ist als ein Viertelkreis.

In Fig. 11 ist eine weitere Ausführungsform der erfindungsgemäßen Speicherfolienzuführung dargestellt. Hier ist das Kompressionsstück 7 in Abänderung zu Fig. 1 am Anschlagstück 6 befestigt und ragt über die Anschlagfläche hinaus. Weiterhin sind die Auflagefläche 10 und der Durchtrittsspalt 9 fest mit dem Anschlagstück 6 verbunden. Die Saugluftkanäle 3 durchdringen das Anschlagstück 6 und das Kompressionsstück 7. In der Ruheposition des Schiebers 4 deckt das Kompressionsstück 7 vorzugsweise den gesamten Durchtrittsspalt 9 ab, so dass kein Fremdlicht in das Abtastgerät gelangen kann. Das Kompressionsstück 7 kann dafür z.B. aus weichem, leicht komprimierbarem Gummimaterial bestehen, welches gegenüber der Hülle 2 einen hohen Haftkoeffizienten aufweist. Weiterhin kann das Kompressionsstück 7 aber auch in dem Anschlagstück 6 verschiebbar gelagert sein, so dass es mit einer Feder aus dem Anschlagstück 6 in Richtung zum Schieber 4 gedrückt wird. Die Federkonstante dieser Feder bestimmt die Andruckkraft mit welcher die Speicherfolienhülle 2 bei geschlossenem Schieber 4 geklemmt und festgehalten wird. Weiterhin ist dieses nicht dargestellte verschiebbar gelagerte Kompressionsstück vorzugsweise mit Anschlägen in dem Anschlagstück 6 ausgestattet, dass er maximal soweit nach links gedrückt werden kann, bis der Durchtrittsspalt 9 vollständig frei wird, und soweit nach rechts, dass der gesamte Durchtrittsspalt 9 durch das Kompressionsstück überdeckt wird. Weiterhin kann das nicht dargestellte verschiebbare Kompressionsstück aus mehreren Teilsegmenten bestehen, die der Einzugsbreite unterschiedlicher Speicherfolienformate entsprechen. So ist gewährleistet, dass der Spalt 9 auch an Positionen, wo sich keine Hülle 2 befindet, lichtdicht durch Segmente des verschiebbaren Kompressionsstückes abgedeckt ist. Weiterhin ist das verschiebbare Kompressionsstück 7 wie auch der Schieber 4 vorzugsweise mit einer Beschichtung versehen, die gegenüber der Hülle 2 einen hohen Haftkoeffizienten aufweist. Wird die Speicherfolie 1 auf die Auflagefläche 10 gelegt, dann wird anschließend der Schieber 4 bis zu der rechten Seite des Durchtrittsspaltes 9 vorgeschoben, so dass die Hülle 2 zwischen dem Schieber 4 und dem Klemmstück 7 bzw. dem Anschlagstück 6 geklemmt wird. Fig. 12 zeigt die Speicherfolie 1 nachdem sie teilweise durch den Durchtrittsspalt 9 gedrückt wurde.

Ein weiterer Vorteil der Zuführung im Vergleich zu einer Ausführung, bei welcher die Speicherfolien in Kassetten zugeführt werden, liegt in der geringeren Bauhöhe, weil sowohl Anlageelemente für die Kassette entfallen und die Kassette mit seinem Betätigungsmittel zum Ausschieben der Speicherfolie selbst mehr Raum einnimmt, als die darin enthaltene Speicherfolie.

Weiterhin ist vorteilhaft, dass bei einer mittigen Anordnung des Sensors in der Zuführung der Transport nur dann anläuft, wenn die Speicherfolie 1 die Mitte des Zuführspaltes überdeckt. So ist bei mittig darunter liegenden Bandtransport sichergestellt, dass die Speicherfolie von diesem sicher eingezogen und weitertransportiert wird.

## Patentansprüche

1. Speicherfolienzuführung zum Zuführen einer Speicherfolie (1) aus einer einseitig an einer Stirnseite offenen flexiblen Hülle (2) in ein Speicherfolienabtastgerät, mit einer einen Durchtrittsspalt (9) für die Speicherfolie (1) aufweisenden Einführöffnung (18), **dadurch gekennzeichnet, dass** in der Einführöffnung (18) ein senkrecht zu einer Flachseite der Hülle (2) arbeitender Schieber (4) sowie ein diesem zugeordnetes Anschlagstück (6) angeordnet ist, an dem die Hülle (2) bei betätigtem Schieber (4) mit ihrer Flachseite anliegt und in der Einführöffnung (18) durch eine vom Schieber (4) ausgeübte Andruckkraft fixierbar ist, wobei eine Unterseite des Schiebers (4) eine ebene Auflagefläche (10) zum Auflegen der Hülle (2) mit ihrer offenen Stirnseite bildet und sich der Durchtrittsspalt (9) in einem unteren Teil des Schiebers (4) befindet.

2. Speicherfolienzuführung nach Anspruch 1, bei der die Haftreibungskoeffizienten der Speicherfolie (1) in der Hülle (2) geringer sind als die Haftreibungskoeffizienten der Hülle (2) gegenüber dem Anschlagstück (6) und dem Schieber (4).

3. Speicherfolienzuführung nach Anspruch 1 oder 2, bei der am Anschlagstück (6) oder an der dem Anschlagstück (6) zugewandten Stirnseite des Schiebers (4) ein elastisches Kompressionsstück (7) angeordnet ist.

4. Speicherfolienzuführung nach Anspruch 3, bei der das Kompressionsstück (7) zugleich zur lichtdichten Abdeckung des Durchtrittsspaltes (9) vorgesehen ist.

5. Speicherfolienzuführung nach Anspruch 4, bei der das Kompressionsstück (7) in einer Ausgangsstellung den Durchtrittsspalt (9) vollständig überdeckt.

6. Speicherfolienzuführung nach einem der vorhergehenden Ansprüche, bei der die Auflagefläche (10) am Schieber (4) schwenkbar um eine parallel zur Auflagefläche (10) orientierte Achse angeordnet ist.

7. Speicherfolienzuführung nach einem der Ansprüche 3 bis 5, bei der das Kompressionsstück (7) und das Anschlagsstück (6) jeweils auf den zugeordneten Speicherfolienseiten eine Haftbeschichtung (12) aufweisen, welche den Haftreibkoeffizienten der Hülle (2) gegenüber dem Schieber (4) und dem Anschlagstück (6) erhöht.

8. Speicherfolienzuführung nach einem der Ansprüche 3 bis 5 oder 7, bei der im Anschlagstück (6) und/oder im Schieber (4) und/oder im Kompressionsstück (7) jeweils auf der Seite der Hülle (2) Saugluftkanäle (3) angeordnet sind.

9. Speicherfolienzuführung nach einem der Ansprüche 1 bis 8, mit einer formschlüssigen Verbindung zwischen Hülle (2) und Anschlagstück (6) und/oder Schieber (4), die bei geschlossenem Schieber (4) das Hindurchziehen der Hülle (2) durch den Durchtrittsspalt (9) verhindert.

10. Speicherfolienzuführung nach Anspruch 9, bei der die formschlüssige Verbindung durch einen auf der Hülle (2) angebrachten Steg (14) und eine Aussparung (15) des Schiebers (4) und/oder des Anschlagstücks (6) ausgeführt ist.

11. Speicherfolienzuführung nach einem der Ansprüche 1 bis 10, mit einem weiteren von dem Durchtrittsspalt (9) beim Einführen der Speicherfolie (1) wegschwenkenden Lichtschutzelement (13), welches den Spalt (9) überdeckt.

12. Speicherfolienzuführung nach einem der Ansprüche 1 bis 11, mit einem im Anschlagstück (6) und/oder den Schieber (4) eingebauten Sensor (16,17) zum Detektieren des Auflegens der in der Hülle (2) befindlichen Speicherfolie (1) auf die Auflagefläche (10).

13. Speicherfolienzuführung nach einem der Ansprüche 1 bis 12, mit einem Sensor (11) auf der Innenseite des Anschlagstücks (6) und/oder des Schiebers (4) zum Detektieren, ob die Speicherfolie (1) den Durchtrittsspalt (9) komplett durchlaufen hat.

14. Speicherfolienzuführung nach einem der Ansprüche 1 bis 13, mit einem Antrieb (M), der bei Auflegen der Speicherfolie (1) in der Hülle (2) an die Auflagefläche (10) des Schiebers (4) den Schieber (4) gegen die Hülle (2) drückt und den Schieber (4) zurückfährt (4), wenn die Speicherfolie (1) den Durchtrittsspalt (9) komplett durchlaufen hat.

15. Speicherfolienzuführung nach einem der Ansprüche 1 bis 14, mit einem zusätzlichen Schieber (20), der in Richtung der Einführöffnung (18) bewegbar ist und mit welchem die Speicherfolie (1) aus der Hülle (2) in das Speicherfolienabtastgerät eingeschoben werden kann.

16. Speicherfolienzuführung nach Anspruch 15, deren zusätzlicher Schieber (20) eine ebene Unterseite hat.

17. Speicherfolienzuführung nach Anspruch 15 oder 16, deren zusätzlicher Schieber (20) durch einen motorischen Antrieb die Speicherfolie (1) in den Durchtrittsspalt (9) schiebt, nachdem der Schieber (4) an dem Anschlagstück (6) anliegt.

18. Speicherfolienzuführung nach einem der Ansprüche 14 bis 17, bei der der zusätzliche Schieber (20) durch einen motorischen Antrieb in eine Ausgangsstellung zurückbewegt wird, wenn die Speicherfolie (1) von einem Einzug (8) erfasst wird.

19. Speicherfolienzuführung nach einem der Ansprüche 1 bis 18, bei der der Schieber (4) und das Anschlagstück (6) mit einem Gehäuse (5) des Speicherfolienabtastgerätes lichtdicht verbunden sind.

20. Speicherfolienzuführung nach einem der Ansprüche 1 bis 19, bei der das Anschlagstück (6) Führungselemente für den Schieber (4) aufweist.

21. Speicherfolienzuführung nach einem der Ansprüche 1 bis 20, bei der an dem Anschlagstück (6) oder dem Gehäuse (5) ein seitliches Anlageelement zu seitlichen Führung der Hülle (2) befestigt ist.

22. Speicherfolienzuführung nach Anspruch 21, bei der das Anlageelement an verschiedenen Positionen für verschiedene Speicherfolien- und Einzugsbreiten positionierbar ist.

23. Speicherfolienzuführung nach einem der Ansprüche 1 bis 22, bei der die Anschlagflächen von Anschlagstück (6) und Schieber (4) senkrecht zur Einzugsrichtung eine gekrümmte Geometrie aufweisen, so dass bei geschlossenem Schieber (4) die Speicherfolie (1) die gleiche Krümmung annimmt.

24. Speicherfolienzuführung nach einem der Ansprüche 1 bis 23, bei der die Innenflächen des Durchtrittsspalts (9) mit einer weichen reibungsarmen Beschichtung versehen sind.

25. Speicherfolienzuführung nach einem der Ansprüche 1 bis 24, bei der die lichte Weite des Durchtrittsspalts (9) größer als die Dicke der Speicherfolie (1) ist und vorzugsweise bei dem Einführen der Speicherfolie (1) die Innenflächen zu der Speicherfolie (1) einen Mindestabstand von 0,3 mm haben.

26. Speicherfolienabtastgerät mit einer Speicherfolienzuführung nach einem der vorhergehenden Ansprüche.

27. Speicherfolienabtastgerät nach Anspruch 26, **dadurch gekennzeichnet, dass** zum tangentialen Einzug und Auswurf parallel zur Drehachse eines umlaufenden Laserstrahls verlaufende Schlitze (18 und 24) vorgesehen sind.

28. Verwendung einer Speicherfolie (1) mit einer an einer Stirnseite offenen flexiblen Hülle (2), wobei die Speicherfolie (1) mindestens eine verschleißarme Deckschicht aufweist, in einem Speicherfolienabtastgerät nach Anspruch 26 oder 27.

29. Verwendung einer Speicherfolie (1) mit einer an einer Stirnseite offenen flexiblen Hülle (2) nach Anspruch 28, wobei die verschleißarme Deckschicht eine höhere Oberflächenhärte aufweist, als das Material auf der/den entsprechenden Innenseite der Hülle (2).

30. Verwendung einer Speicherfolie (1) nach Anspruch 28 oder 29 , wobei die Speicherfolie (1) eine gegenüber der Hülle (2) verschleißarme Beschriftung aufweist.

31. Verwendung einer Speicherfolie (1) nach Anspruch 30, wobei die Beschriftung eine höhere Oberflächenhärte aufweist, als das Material auf der/den entsprechenden Innenseiten der Hülle (2).

## Claims

1. Storage film feed for feeding a storage film (1) from a flexible casing (2) which is open on one side on a front side into a storage film scanning device, having an insertion opening (18) having a passage gap (9) for the storage film (1), **characterised in that** a slider (4) which works perpendicularly to a flat side of the casing (2) and a stop piece (6) allocated to this are arranged in the insertion opening (18), on which stop piece (6) the casing (2) lies with its flat side in the event of an actuated slider (4) and can be fixed in the insertion opening (18) by means of a pressing force exerted by the slider (4), wherein a lower side of the slider (4) forms a flat support surface (10) for the application of the casing (2) with its open front side and the passage gap (9) is located in a lower part of the slider (4).

2. Storage film feed according to claim 1, wherein the static friction coefficients of the storage film (1) in the casing (2) are lower than the static friction coefficients of the casing (2) with respect to the stop piece (6) and the slider (4).

3. Storage film feed according to claim 1 or 2, wherein an elastic compression piece (7) is arranged on the stop piece (6) or on the front side of the slider (4) which faces towards the stop piece (6).

4. Storage film feed according to claim 3, wherein the compression piece (7) is at the same time provided as a lightproof covering of the passage gap (9).

5. Storage film feed according to claim 4, wherein the compression piece (7) completely covers the passage gap (9) in a starting position.

6. Storage film feed according to one of the preceding claims, wherein the support surface (10) is arranged on the slider (4) to be pivotable about an axis which is orientated in parallel to the support surface (10).

7. Storage film feed according to one of claims 3 to 5, wherein the compression piece (7) and the stop piece (6) each have an adhesive coating (12) on the allocated storage film sides, said adhesive coating (12) increasing the static friction coefficients of the casing (2) with respect to the slider (4) and the stop piece (6).

8. Storage film feed according to one of claims 3 to 5 or 7, wherein suction air channels (3) are arranged in the stop piece (6) and/or in the slider (4) and/or in the compression piece (7) on the side of the casing (2) in each case.

9. Storage film feed according to one of claims 1 to 8, having a positive-locking connection between the casing (2) and the stop piece (6) and/or slider (4) which prevents the casing (2) from being pulled through the passage gap (9) when the slider (4) is closed.

10. Storage film feed according to claim 9, wherein the positive-locking connection is implemented by a bar (14) which is attached to the casing (2) and a recess (15) of the slider (4) and/or the stop piece (6).

11. Storage film feed according to one of claims 1 to 10, having a further light protection element (13) which is pivoted away from the passage gap (9) when the storage film (1) is inserted, said light protection element (13) covering the gap (9).

12. Storage film feed according to one of claims 1 to 11, having a sensor (16, 17) which is installed in the stop piece (6) and/or the slider (4) for detecting the application of the storage film (1) located in the casing (2) onto the support surface (10).

13. Storage film feed according to one of claims 1 to 12, having a sensor (11) on the inner side of the stop piece (6) and/or the slider (4) for detecting whether the storage film (1) has completely passed through the passage gap (9).

14. Storage film feed according to one of claims 1 to 13, having a drive (M) which presses the slider (4) against the casing (2) when the storage film (1) in the casing (2) is applied onto the support surface (10) of the slider (4), and moves the slider (4) back when the storage film (1) has completely passed through the passage gap (9).

15. Storage film feed according to one of claims 1 to 14, having an additional slider (20) which can be moved in the direction of the insertion opening (18) and by means of which the storage film (1) can be inserted from the casing (2) into the storage film scanning device.

16. Storage film feed according to claim 15, the additional slider (4) of which has a flat lower side.

17. Storage film feed according to claim 15 or 16, the additional slider (20) of which slides the storage film (1) into the passage gap (9) by means of a motor drive once the slider (4) is resting on the stop piece (6).

18. Storage film feed according to one of claims 14 to 17, wherein the additional slider (20) is moved back into a starting position by means of a motor drive when the storage film (1) is collected by a draw-in (8).

19. Storage film feed according to one of claims 1 to 18, wherein the slider (4) and the stop piece (6) are connected to a housing (5) of the storage film scanning device in a lightproof manner.

20. Storage film feed according to one of claims 1 to 19, wherein the stop piece (6) has guiding elements for the slider (4).

21. Storage film feed according to one of claims 1 to 20, wherein a lateral contact element is fastened to the stop piece (6) or the housing (5) for laterally guiding the casing (2).

22. Storage film feed according to claim 21, wherein the contact element can be positioned at different positions for different storage film and draw-in widths.

23. Storage film feed according to one of claims 1 to 22, wherein the stop surfaces of the stop piece (6) and slider (4) have a curved geometry perpendicular to the draw-in direction such that the storage film (1) assumes the same curvature when the slider (4) is closed.

24. Storage film feed according to one of claims 1 to 23, wherein the inner surfaces of the passage gap (9) are provided with a soft, low-friction coating.

25. Storage film feed according to one of claims 1 to 24, wherein the clear width of the passage gap (9) is greater than the thickness of the storage film (1) and the inner surfaces with respect to the storage film (1) preferably have a minimum distance of 0.3mm during insertion of the storage film (1).

26. Storage film scanning device having a storage film feed according to one of the preceding claims.

27. Storage film scanning device according to claim 26, **characterised in that** slots (18 and 24) running in parallel to the axis of rotation of a circulating laser beam are provided for tangential draw-in and ejection.

28. Use of a storage film (1) having a flexible casing (2) which is open on a front side, wherein the storage film (1) has at least one wear-resistant cover layer, in a storage film scanning device according to claim 26 or 27.

29. Use of a storage film (1) having a flexible casing (2) according to claim 28 which is open on a front side, wherein the wear-resistant cover layer has a higher surface hardness than the material on the corresponding inner side of the casing (2).

30. Use of a storage film (1) according to claim 28 or 29, wherein the storage film (1) has a wear-resistant labelling with respect to the casing (2).

31. Use of a storage film (1) according to claim 30, wherein the labelling has a higher surface hardness than the material on the corresponding inner sides of the casing (2).

## Revendications

1. Dispositif pour faire passer un disque (1) magnétique souple d'un étui (2) flexible, ouvert d'un côté frontal, dans un appareil de balayage de disque magnétique souple, ayant une ouverture (18) d'introduction, comportant une fente (9) de passage pour le disque (1) magnétique souple, **caractérisé en ce qu'**il est disposé, dans l'ouverture (18) d'introduction, un coulisseau (4), travaillant perpendiculairement à un côté plat de l'étui (2), ainsi qu'une pièce (6) de butée, qui est associée au coulisseau (4), à laquelle l'étui (2), lorsque le coulisseau (4) est actionné, s'applique par son côté plat et qui peut être immobilisée dans l'ouverture (18) d'introduction par une force de poussée appliquée par le coulisseau (4), un côté inférieur du coulisseau (4) formant une surface (10) plane de support, pour supporter l'étui (2) par son côté frontal ouvert et la fente (9) de passage se trouve dans une partie inférieure du coulisseau (4).

2. Dispositif pour faire passer un disque magnétique souple suivant la revendication 1, dans lequel les coefficients de frottement statique du disque (1) magnétique souple dans l'étui (2) sont plus petits que les coefficients de frottement statique de l'étui (2) par rapport à la pièce (6) de butée et au coulisseau (4).

3. Dispositif pour faire passer un disque magnétique souple suivant la revendication 1 ou 2, dans lequel une pièce (7) élastique de compression est disposée sur la pièce (6) de butée ou sur le côté frontal, tourné vers la pièce (6) de butée, du coulisseau (4).

4. Dispositif pour faire passer un disque magnétique souple suivant la revendication 3, dans lequel la pièce (7) de compression est prévue en même temps pour recouvrir, d'une manière étanche à la lumière, la fente (9) de passage.

5. Dispositif pour faire passer un disque magnétique souple suivant la revendication 4, dans lequel la pièce (7) de compression recouvre, dans une position initiale, complètement la fente (9) de passage.

6. Dispositif pour faire passer un disque magnétique souple suivant l'une des revendications précédentes, dans lequel la surface (10) de support est montée pivotante sur le coulisseau (4), autour d'un axe orienté parallèlement à la surface (10) de support.

7. Dispositif pour faire passer un disque magnétique souple suivant l'une des revendications 3 à 5, dans lequel la pièce (7) de compression et la pièce (6) de butée ont chacune un revêtement (12) adhésif sur les côtés de disque magnétique souple associés, qui augmente le coefficient de frottement statique de l'étui (2) par rapport au coulisseau (4) et à la pièce (6) de butée.

8. Dispositif pour faire passer un disque magnétique souple suivant l'une des revendications 3 à 5 ou 7, dans lequel des conduits (3) d'aspiration d'air sont prévus respectivement du côté de l'étui (2) dans la pièce (6) de butée et/ou dans le coulisseau (4) et/ou dans la pièce (7) de compression.

9. Dispositif pour faire passer un disque magnétique souple suivant l'une des revendications 1 à 8, ayant une liaison à complémentarité de forme entre l'étui (2) et la pièce (6) de butée et/ou le coulisseau (4), qui empêche, lorsque le coulisseau (4) est fermé, de tirer l'étui (2) par la fente (9) de passage.

10. Dispositif pour faire passer un disque magnétique souple suivant la revendication 9, dans lequel la liaison à complémentarité de forme est réalisée par une barrette (14) mise sur l'étui (2) et un évidement (15) du coulisseau (4) et/ou de la pièce (6) de butée.

11. Dispositif pour faire passer un disque magnétique souple suivant l'une des revendications 1 à 10, comprenant un autre élément (13) de protection vis-à-vis de la lumière, pouvant pivoter en s'éloignant de la fente (9) de passage, lors de l'introduction du disque (1) magnétique souple et recouvrant la fente (9).

12. Dispositif pour faire passer un disque magnétique souple suivant l'une des revendications 1 à 11, comprenant un capteur (16, 17), incorporé dans la pièce (6) de butée et/ou dans le coulisseau (4), pour détecter que le disque (1) magnétique souple se trouvant dans l'étui (2) est mis sur la surface (10) de support.

13. Dispositif pour faire passer un disque magnétique souple suivant l'une des revendications 1 à 12, comprenant un capteur (11) du côté intérieur de la pièce (6) de butée et/ou du coulisseau (4), pour détecter si le disque (1) magnétique souple est passé complètement dans la fente (9) de passage.

14. Dispositif pour faire passer un disque magnétique souple suivant l'une des revendications 1 à 13, comprenant un entraînement (M), qui, lorsque le disque (1) magnétique souple dans l'étui (2) est mis sur la surface (10) de support du coulisseau (4), pousse le coulisseau (4) sur l'étui (2) et ramène le coulisseau (4), si le disque (1) magnétique souple est passé complètement dans la fente (9) de passage.

15. Dispositif pour faire passer un disque magnétique souple suivant l'une des revendications 1 à 14, comprenant un coulisseau (20) supplémentaire, qui est mobile dans la direction de l'ouverture (18) d'entrée et par lequel le disque (1) magnétique souple peut être introduit de l'étui (2) dans l'appareil de balayage de disque magnétique souple.

16. Dispositif pour faire passer un disque magnétique souple suivant la revendication 15, dont le coulisseau (20) supplémentaire a un côté inférieur plan.

17. Dispositif pour faire passer un disque magnétique souple suivant la revendication 15 ou 16, dont le coulisseau (20) supplémentaire fait glisser, par un entraînement à moteur, le disque (1) magnétique souple dans la fente (9) de passage, après que le coulisseau (4) est venu sur la pièce (6) de butée.

18. Dispositif pour faire passer un disque magnétique souple suivant l'une des revendications 14 à 17, dans lequel le coulisseau (20) supplémentaire est ramené à une position initiale par un entraînement à moteur, lorsque le disque (1) magnétique souple est détecté par une entrée (8).

19. Dispositif pour faire passer un disque magnétique souple suivant l'une des revendications 1 à 18, dans lequel le coulisseau (4) et la pièce (6) de butée sont reliés, d'une manière étanche à la lumière, à un boîtier (5) de l'appareil de balayage de disque magnétique souple.

20. Dispositif pour faire passer un disque magnétique souple suivant l'une des revendications 1 à 19, dans lequel la pièce (6) de butée a des éléments de guidage du coulisseau (4).

21. Dispositif pour faire passer un disque magnétique souple suivant l'une des revendications 1 à 20, dans lequel un élément d'application latéral, pour guider latéralement l'étui (2), est fixé à la pièce (6) de butée ou au boîtier (5).

22. Dispositif pour faire passer un disque magnétique souple suivant la revendication 21, dans lequel l'élément d'application peut être mis en diverses positions pour diverses largeurs de disque magnétique souple et d'entrée.

23. Dispositif pour faire passer un disque magnétique souple suivant l'une des revendications 1 à 22, dans lequel les surfaces de butée de la pièce (6) de butée et du coulisseau (4) ont une géométrie incurvée perpendiculairement à la direction d'entrée, de manière à ce que, lorsque le coulisseau (4) est fermé, le disque (1) magnétique souple prenne la même courbure.

24. Dispositif pour faire passer un disque magnétique souple suivant l'une des revendications 1 à 23, dans lequel les surfaces intérieures de la fente (9) de passage sont pourvues d'un revêtement doux donnant peu de frottement.

25. Dispositif pour faire passer un disque magnétique souple suivant l'une des revendications 1 à 24, dans lequel la largeur libre de la fente (9) de passage est plus grande que l'épaisseur du disque (1) magnétique souple et, de préférence, lors de l'introduction du disque (1) magnétique souple, les surfaces intérieures ont, par rapport au disque (1) magnétique souple, une distance minimum de 0,3 mm.

26. Appareil de balayage de disque magnétique souple comprenant un dispositif pour faire passer des disques magnétiques souples suivant l'une des revendications précédentes.

27. Appareil de balayage de disque magnétique souple suivant la revendication 26, **caractérisé en ce qu'**il est prévu des fentes (18 et 24) s'étendant, pour l'entrée tangentielle et l'éjection, parallèlement à l'axe de rotation d'un faisceau laser tournant.

28. Utilisation d'un disque (1) magnétique souple comprenant un étui (2) souple ouvert sur un côté frontal, le disque (1) magnétique souple ayant au moins une couche de finition ayant peu d'attrition dans un appareil de balayage de disque magnétique souple suivant la revendication 26 ou 27.

29. Utilisation d'un disque (1) magnétique souple comprenant un étui (2) souple ouvert d'un côté frontal suivant la revendication 28, dans lequel la couche de finition, s'usant peu, a une dureté de surface plus grande que le matériau du ou des côtés intérieurs correspondants de l'étui (2).

30. Utilisation d'un disque (1) magnétique souple suivant la revendication 28 ou 29, dans lequel le disque (1) magnétique souple a une inscription s'usant peu par rapport à l'étui (2).

31. Utilisation d'un disque (1) magnétique souple suivant la revendication 30, dans lequel l'inscription a une dureté de surface plus grande que le matériau du ou des côtés intérieurs correspondants de l'étui (2).
